# EUROPEAN PATENT SPECIFICATION

(11) **EP 2 036 305 B1**
(45) Date of publication and mention of the grant of the patent: **18.09.2013**
(21) Application number: 07826152.6
(22) Date of filing: 19.06.2007
(51) Int. Cl.: H04L 29/06

(54) **COMMUNICATION NETWORK APPLICATION ACTIVITY MONITORING AND CONTROL**
ÜBERWACHUNG UND STEUERUNG DER ANWENDUNG EINER KOMMUNIKATIONSNETZWERKANWENDUNG
SUIVI ET CONTRÔLE D'ACTIVITÉ D'APPLICATION DE RÉSEAU DE COMMUNICATION

(30) Priority: 20.06.2006 US 815099 P; 28.07.2006 US 460789
(43) Date of publication of application: 18.03.2009
(73) Proprietor: Alcatel Lucent, 75007 Paris (FR)
(72) Inventor: STRUB, Lyle, Ottawa, Ontario K2C 2G2 (CA); GROSSNER, Clifford, Ottawa, Ontario K2H 8Z3 (CA); GRAH, Adrian, Kanata, Ontario K2L 2S5 (CA)
(74) Representative: Therias, Philippe
(86) International application number: PCT/IB2007/053432
(87) International publication number: WO 2008/001339

(56) References cited:
- EP-A- 1 132 847
- EP-A- 1 308 821
- WO-A-99/16203
- US-A1- 2004 225 752

## Description

The present patent application claims the benefit of United States Provisional Patent Application Serial No. 60/815,099, entitled "COMMUNICATION NETWORK APPLICATION ACTIVITY MONITORING AND CONTROL", and filed on June 20, 2006.

The present patent application is related to each of the following patent applications:

United States Provisional Patent Application Serial No. 60/814,983, entitled "NETWORK SERVICE PERFORMANCE MONITORING APPARATUS AND METHODS", and filed on June 20, 2006, and United States Utility Patent Application Serial No. 11/557,287, filed on November 7, 2006 and claiming the benefit thereof;

United States.Provisional Patent Application Serial No. 60/815,134, entitled "SECURE DOMAIN INFORMATION PROTECTION APPARATUS AND METHODS", and filed on June 20, 2006, and United States Utility Patent Application Serial No. 11/467,387, filed on August 25, 2006 and claiming the benefit thereof;

United States Provisional Patent Application Serial No. 60/814,963, entitled "SECURE COMMUNICATION NETWORK USER MOBILITY APPARATUS AND METHODS", and filed on June 20, 2006, and United States Utility Patent Application Serial No. 11/465,172, filed on August 17, 2006 and claiming the benefit thereof.

### Field of the Invention

This invention relates generally to communications and, in particular, to monitoring and control of usage of applications that are available in a communication network.

### Background

Services for which information is distributed through a communication network are generally referred to as network services. "Web services" are an example of network services, and represent the next generation of technology being used for automatically exchanging information between different applications over the public Internet and many private networks. Web services provide a framework for building web-based distributed applications, and can provide efficient and effective automated machine-to-machine communications.

From a technology point of view, web services are network accessible functions that can be accessed using standard Internet protocols such as HyperText Transfer Protocol (HTTP), extensible Markup Language (XML), Simple Object Access Protocol (SOAP), etc., over standard interfaces.

The real power of web services technology is in its simplicity. The core technology only addresses the common language and communication issues and does not directly address the onerous task of application integration. Web services can be viewed as a sophisticated machine-to-machine Remote Procedure Call (RPC) technology for interconnecting multiple heterogeneous untrusted systems. Web services take the best of many new technologies by utilizing XML technology for data conversion/transparency and Internet standards such as HTTP and Simple Mail Transfer Protocol (SMTP) for message transport.

One of the primary drivers behind the development and standardization of web services is the ability to facilitate seamless machine-to-machine application-level communications by providing a loose coupling between disparate applications. Such a loose coupling of applications allows applications on different servers to interoperate without requiring a static, inflexible interface between them. Applications using very different technologies can interoperate using standard web services protocols.

A significant problem that network and application administrators face in respect of network services, or more generally network applications for which services are exposed to users, is the ability to monitor and control which users are on a managed network and what those users are doing. Good corporate governance dictates that proper monitoring and control points be in place for all business activities, and demonstrating compliance to government regulations related to corporate governance has become a difficult and costly task for many enterprises. Activity logging by applications is inconsistent at best and non-existent at worst. It is a major effort, for example, for an administrator to manually produce a consolidated report of system and application access by any given user.

There are no currently available products that allow network and application administrators to monitor, control, and report on application accesses such as service usage by users in a consolidated manner. Although an individual application might provide control and reporting of user activity for that particular application, applications do not have the capability to provide a consolidated view of user activity on other applications. This leaves administrators with no mechanism for consolidated control and monitoring other than through manual consolidation of user activity logs from all applications in order to produce a consolidated report.

Network nodes that process application access traffic such as service access messages, including existing firewalls and gateways for instance, may produce a log of all messages that have been processed. They do not, however, associate messages from the same user to produce consolidated user-specific records of application access. Furthermore, they do not allow run time action to be taken based on the application access log data.

US 2004/0225752A1 and EP 1 308 821 A2 disclose examples of internet portal and web page management systems which involve usage tracking but do not provide consolidated user-records of application access across all applications.

Thus, there remains a need for improved monitoring and run time control of network applications such as web services.

### Summary of the Invention

According to an embodiment of the invention, the ability to group multiple application/service accesses into a single user-specific multiple-application record is provided. This may enable real-time policy enforcement and consolidated audit trail generation for validated network users.

A machine-implemented method in accordance with an aspect of the invention is defined at claim 1.

Detecting may involve receiving, at a web services node, a user request for access to an application server by which at least one application of the plurality of applications is provided.

The method may also include identifying the user by authenticating credentials of the user against information stored in a user database.

The operation of detecting may involve receiving application access information associated with access by the user to an application of the plurality of applications, in which case the method may also include determining whether the received application access information complies with an application session policy, and transferring the received application access information between the user and an application server by which the application is provided where the received application access information complies with the application session policy. The application session policy may include at least one of: a user-specific policy, an application-specific policy, and a global communication network policy.

In some embodiments, the method also includes determining, responsive to detecting access by the user to an application of the plurality of applications, whether a multiple-application session record for the user exists in a database, and creating a multiple-application session record for storing entries recording access by the user to the plurality of applications where a multiple-application session record for the user does not exist in the database.

The method may include reporting contents of the multiple-application session record.

The plurality of applications may include applications provided by a plurality of application servers.

The method may be embodied, for example, in a machine-readable medium storing instructions for execution.

An apparatus is also provided, and includes features recited at claim 9.

The apparatus may also include a memory operatively coupled to the session management module for storing the multiple-application session record. The session management module may be operable to create the application session record in the memory.

The access detector may include an authentication module, which is operable to detect access by a user to the plurality of applications by authenticating credentials of the user against information stored in a user database.

In some embodiments, the apparatus includes an interface operatively coupled to the access detector and to the session management module and operable to receive application access information associated with access by the user to an application of the plurality of applications. The session management module may be further operable to determine whether the received application access information complies with an application session policy, and to transfer the received application access information between the user and an application server by which the application is provided where the received application access information complies with the application session policy.

The apparatus may also include an interface for reporting contents of the application session record.

A plurality of application servers may provide the plurality of applications.

Such an apparatus may be implemented, for example, in a web services node for managing web service application usage.

Another aspect of the invention provides a machine-readable medium storing a data structure. The data structure includes an identifier of a communication network user, and a plurality of entries indicating access by the user to a plurality of applications provided in the communication network.

The plurality of applications may include applications provided by a plurality of application servers.

Other aspects and features of embodiments of the present invention will become apparent to those ordinarily skilled in the art upon review of the following description.

### Brief Description of the Drawings

Examples of embodiments of the invention will now be described in greater detail with reference to the accompanying drawings.
Fig. 1 is a block diagram of a communication system.
Fig. 2 is a block diagram of an application activity monitoring apparatus.
Fig. 3 is a flow diagram of an application activity monitoring method.
Fig. 4 is a block diagram of an application activity monitoring data structure.

### Detailed Description of Preferred Embodiments

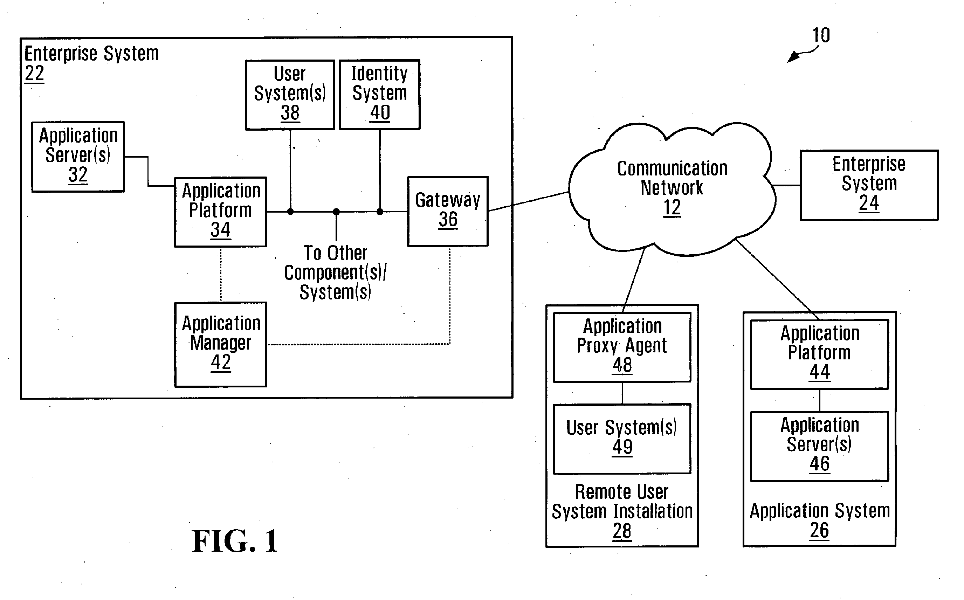

Fig. 1 is a block diagram of a communication system in which embodiments of the invention may be implemented. The communication system 10 includes a communication network 12, to which enterprise systems 22, 24, an application system 26, and a remote user system installation 28 are operatively coupled through respective communication links.

The enterprise system 22 includes one or more application servers 32, an application platform 34 operatively coupled to the application server(s), a gateway 36 operatively coupled to the application platform and to the communication network 12, one or more user systems 38 operatively coupled to the application platform and to the gateway, an identity system 40 operatively coupled to the application platform, to the user system(s), and to the gateway, and an application manager 42 operatively coupled to the application platform and to the gateway. Other components or systems, such as firewalls located on either side of the gateway 36 to provide a DeMilitarized Zone (DMZ), may also be deployed. The enterprise system 24 may have a similar structure.

In the application system 26, an application platform 44 is operatively coupled to the communication network 12 and to one or more application servers 46. The remote user system installation 28 includes an application proxy agent 48 operatively coupled to one or more user systems 49.

Although many enterprise systems, application systems, remote user system installations, and possibly other types of systems may be provided in a communication system, only illustrative examples of certain types of systems have been shown in Fig. 1 to avoid overly complicating the drawing. Internal details of the communication network 12, such as border or access equipment and core switching/routing components, and the enterprise system 24 have also been omitted from Fig. 1 for similar reasons. The type, structure, and operation of the communication network 12 may vary between deployments of embodiments of the invention. Other embodiments of the invention may also include enterprise systems, application systems, and/or remote user system installations that include fewer, further, or different components, with similar or different interconnections, than shown.

It should therefore be appreciated that the communication system 10 of Fig. 1, as well as the contents of the other drawings, are intended solely for illustrative purposes, and that the present invention is in no way limited to the particular example embodiments explicitly shown in the drawings and described herein.

Those skilled in the art to which the present invention pertains will be familiar with many different types of communication networks, including overlay networks such as application layer networks and more traditional infrastructures. The present invention is not limited to any particular type of communication network. In one embodiment, the communication network 12 is the Internet or some other public network.

Many examples of access technologies through which the systems 22, 24, 26, 28 access the communication network 12 will also be familiar to those skilled in the art, and accordingly have not been separately shown in Fig. 1.

Considering first the enterprise system 22, an application server 32 supports applications that may provide functions, illustratively services, for use by at least the local user system(s) 38. Where multiple application servers 32 are deployed, each server supports a respective set of functions or services, which may or may not overlap the services supported by other servers.

In some embodiments, these functions are also made available for use by external user systems, such as user systems in the enterprise system 24, ,where owners or operators of the enterprise systems 22, 24 have an agreement for inter-system access by their users, and/or the user system(s) 49 at the remote user system installation 28.

References herein to use of applications are intended to convey the notion of any such function. Generally, an application server 32 executes a software application to provide these functions. A service, such as a web service, is an example of an application function that is exposed to user systems, in the context of the present disclosure. Any references to applications, functions, and services should be interpreted accordingly.

An application server 32 may include such components as one or more processors, one or more memory devices, and an interface for exchanging application transaction information, such as service request messages and corresponding responses, with user systems. Memory devices in an application server 32 may be used to store operating system software, application software, etc., for use by the application server processor(s). Enterprise systems such as 22 are often implemented as a network, in which case a network interface enables the application server(s) 32 to communicate with the user system(s) 38 and possibly other components of the enterprise system. In another possible implementation, an application server 32 includes separate interfaces for communicating with different enterprise system components.

A user system 38 may similarly include one or more processors, one or more memory devices, and some sort of interface(s) for communicating with the application server(s) 32, and possibly other components of the enterprise system 22. Operating system software, client software for interacting with the application server(s) 32, and/or other types of information may be stored in user system memory devices.

Those skilled in the art will be familiar with many different types of systems that provide and/or use network applications. Embodiments of the present invention relate primarily to monitoring the use of and restricting access to network applications, as opposed to how these applications are actually supported, and accordingly the application server(s) 32, the user system(s) 38, and their operation are described only briefly herein to the extent necessary to illustrate aspects of the invention.

The identity system 40 represents another component that is commonly provided in enterprise systems such as corporate networks and will be familiar to those skilled in the art. Access to services or other functions supported by the application server(s) 32 in many cases must be restricted to a particular set of users. The identity system 40, which may authenticate users and/or user systems through interaction with a Lightweight Directory Access Protocol (LDAP) directory or other type of user database, for example, supplies a digital identity that may be used for authorizing or denying access to network services.

In terms of structure, the application platform 34 includes application server interfaces that are compatible with the user system interfaces, illustratively Application Programming Interfaces (APIs), of the application server(s) 32, one or more interfaces compatible with the application server interface(s) of the user system(s) 38, and components for processing messages or other information received and/or transmitted through these interfaces. As described in further detail below, external user systems may be able to access the application server(s) 32 through the gateway 36, in which case the user system interface(s) of the application platform 34 may also enable the application platform to communicate with the gateway 36. However, in some embodiments, a separate gateway interface may be provided for this purpose.

The gateway 36 would also include one or more internal interfaces compatible with interfaces of other components of the enterprise system 22, one or more external interfaces for enabling communication signals to be transmitted and/or received through the communication network 12, and intermediate components for processing signals received and/or transmitted through the interfaces.

The application manager 42 represents a control or monitoring element that might not itself perform real-time processing of information as it is transferred between the application server(s) 32 and the local user system(s) 38 or external user systems. The application manager 42 may communicate with the application platform 34 and the gateway 36 through compatible interfaces, to perform such functions as configuring the application platform and/or the gateway, illustratively by downloading application session policies to the platform and/or the gateway for enforcement, accessing application session information that is collected in accordance with embodiments of the invention, etc.

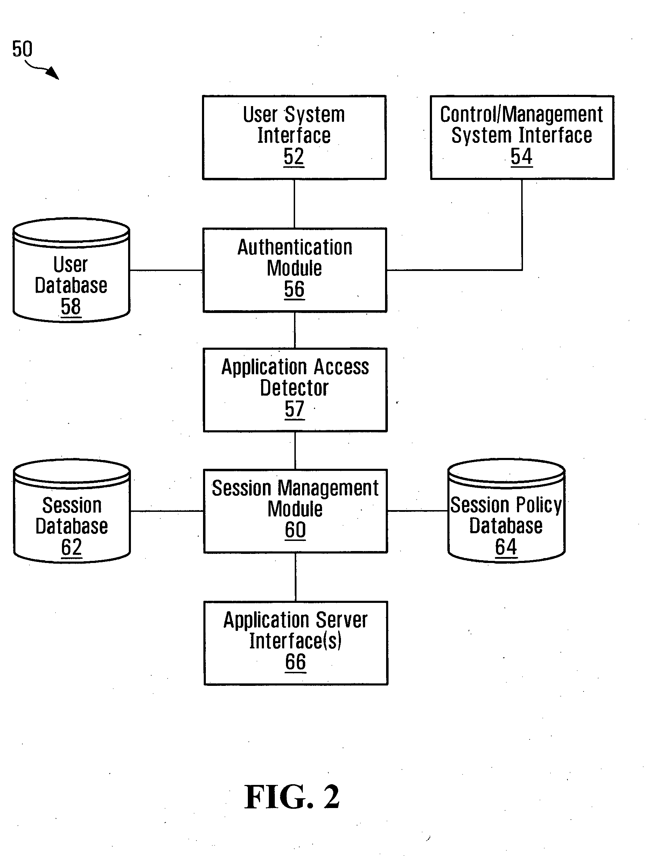

The internal components of the application platform 34, the gateway 36, and the application manager 42 may be implemented in hardware, software, firmware, or some combination thereof. A monitoring system, as described below with reference to Fig. 2, provides an illustrative example of a subsystem that may be provided in the application platform 34 or the gateway 36.

In a traditional deployment of a so-called Service Oriented Architecture (SOA) for an enterprise network, SOA components are individually deployed and integrated on each application server. Publishing a service for use on a network, within the enterprise system 22 for instance, would require a service registry for discovery and management of service offerings. Although web service standards address the need to restrict service access to authorized users, a web services policy server would be needed to store and provide this information. Enforcing these policies can also be a challenge, in that software vendors may require substantial changes to applications and servers in order to adapt to enterprise systems.

All of this can represent a significant project for an enterprise, and may well have a relatively long implementation cycle. In addition, the skill set required to implement such a project is highly specialized, which might make an SOA implementation not economically feasible.

When extending web services or other types of applications to partners, between the enterprise systems 22, 24, for example, even more challenges exist for an SOA infrastructure deployed on application servers. For instance, applications deployed at partner sites might use diverse security mechanisms that cannot share user identity information freely, requiring translation of security tokens for users. Placing the burden of security token translation, or other security functions, on each application server tends to be costly and inefficient.

Data privacy requirements are also very difficult or even impossible to enforce at each application server since application servers themselves might not be aware of whether a user system, or more generally a consumer of its service, is external to its enterprise system.

XML-specific denial of service (XDoS) attacks, and possibly other threats, may be particularly problematic in application server-based SOA implementations. Web services, for example, are open to XDoS attacks, which cannot be effectively dealt with on application servers.

The migration of server-based SOA to a web services model to achieve application interoperability via loosely coupling applications necessitates the need for additional messaging, illustratively in the form of SOAP headers and XML messages, as well as additional processing requirements for managing these messages. This additional overhead consumes network bandwidth and can result in significant new requirements for application server hardware.

An alternate model for deployment of an SOA infrastructure is to integrate the SOA components into enterprise network elements, as shown in Fig. 1. The application platform 34, the gateway 36, and the application manager 42 represent SOA components in the enterprise system 22.

Deploying the SOA infrastructure separately from the application server(s) 32 may provide several benefits: the SOA infrastructure is then application agnostic, applications require minimal modification, the SOA infrastructure is an end-to-end integrated solution, application server processing overhead is minimized, and network bandwidth can be optimized.

With an enterprise system-/network-based SOA deployment, any message translations required for applications to interoperate can be performed according to policies set within the enterprise system, not by the applications themselves. This allows translations to be defined independently of applications, removing the reliance on application vendor implementations.

The business logic required to adapt message format and content is thus provided by the enterprise, not by the application, minimizing application modification. Web services messages, for example, can be adapted within an enterprise network to achieve application interoperability. As new interoperability requirements arise, perhaps due to merger, acquisition, or the need to integrate with a new partner, no application modification is required. New policies for message translation can instead be defined to provide for the new interoperability.

An SOA infrastructure deployed as an integrated enterprise network solution can provide a single monitoring, control, and consolidated reporting point, illustratively the application manager 42. This can be important to enable proper corporate governance, continuous corporate improvement, and the ability to demonstrate compliance with regulations concerning data privacy and network security, for instance.

Application server processing requirements for application interoperability can be significantly reduced for two reasons: application server offload and a reduced number of required translations. Translation can be done once, at the application platform 34, for example, and then forwarded onto multiple destinations rather than each application performing its own translation.

The network bandwidth consumed by additional message traffic can be reduced by routing packets to the application server(s) 32 based upon inspecting the message SOAP headers, XML tags, or other message content. Routing can be sensitive to application contexts rather than based on static IP addresses, for example.

If application server functions are to be extended to partner enterprise systems, an SOA infrastructure deployed as enterprise network infrastructure may provide many further advantages. Translation of security tokens can be done once at the demarcation point between the partners' networks, illustratively at the gateway 36 for external accesses to the application server(s) 32, providing a single enforcement point for security policy. Data privacy can also be enforced at the point where data leaves a security domain, again at the gateway 36, for example. This drives efficiencies and reduces costs. In addition, denial of service attacks targeted at corporate web services can be defended at the gateway 36, the enterprise network edge, which is perhaps the most secure place to deal with this issue.

The application platform 34 provides an SOA infrastructure for integrating applications that traditionally have run as stand-alone applications, and may enable such capabilities as controlling and monitoring all activity initiated by a validated user to thereby allow generation of a consolidated audit trail, translation for message and document formats, managing the life cycle for applications including the staged rollout of web services and rollback to previous versions in the event of unexpected behavior for instance, and monitoring application/service performance to ensure that applications/services meet internal corporate requirements.

This listing of example functions of the application platform 34, like other functional examples noted herein, is by no means restrictive or exhaustive. Many functions may be implemented independently, every embodiment need not necessarily provide all functions, and other functions may also be or become apparent to those skilled in the art.

Benefits of the application platform 34 may include reduced application integration cost through minimum change to existing applications, as noted above, ensuring that access to corporate applications complies with Government regulations, a central monitoring and control point for employee access to web services, and continuous corporate improvement through consolidated reporting.

The gateway 36 effectively extends an intranet SOA provided by the enterprise system 22, through the communication network 12, into an extranet, allowing seamless integration with customers and partners without compromising security or privacy. Functions of the gateway 36 may include, possibly among others, any or all of extending applications to a partner extranet and branch locations, providing seamless mobility for partner access to applications, ensuring partner access to corporate applications complies with Government regulations, and maintaining privacy of corporate identities without compromising traceability.

In providing mobile access to the application server(s) 32 from any partner sites associated with the enterprise system 22, the gateway 36 may allow the secure identification of partner institutions and acceptance of identities between different security domains. Application message and data translations, for user systems associated with external partner sites, may also be provided by the gateway 36, while ensuring that all data remains private as per corporate policy. A consolidated audit trail of all application access may be collected and provided to an external partner enterprise system by the gateway 36, to demonstrate conformance with regulations for instance.

The application manager 42 provides a central point for monitoring and control of the application platform 34, the gateway 36, and any other platforms and gateways (not shown) in the enterprise system 22. Globally consistent policies for all applications, so as to ensure improved corporate governance and/or compliance with Government regulations, can also be established in some embodiments through the application manager 42 and distributed to the application platform 34 and to the gateway 36 for enforcement. The central application manager 42 may also provide for globally consistent application change management. ,

As noted above, the enterprise system 24 may be substantially similar to the enterprise system 22.

The enterprise system 22 includes both application server(s) 32 that support applications and one or more user system(s) 38 that may use those applications. However, it should be appreciated that application servers and user systems need not necessarily be co-located. The application system 26, for example, includes one or more application servers 46, but no local user systems. Although only an application platform 44 is shown in the application system 26, some implementations of an application system might also include a gateway. Whereas the application system 26 as shown might be suitable, for example, for a remote data center that is associated with a primary data center as the enterprise system 22, a stand-alone or "unaffiliated" application system that hosts applications for use by external user systems might also include a gateway for handling authentication of the external users for instance.

The application platform 44 in the application system 26 may interact with the application manager 42 of the enterprise system 22, or more generally the application manager of its affiliated enterprise system. In the case of a stand-alone application system, a local application manager may be provided. In some implementations, an external services controller interacts with SOA infrastructure components in multiple different domains.

For example, an external services controller that is operatively coupled to the communication network 12 might configure the gateway 36 and a gateway in the enterprise system 24 to collect and exchange application performance statistics.

A user-only deployment is shown in Fig. 1 as the remote user system installation 28. The application proxy agent 48 allows the user system(s) 49 at a partner or branch location, for example, to use applications provided by remotely located application servers. In one embodiment, the application proxy agent 48 is a scaled-down version of the gateway 36. The application proxy agent 48, like the gateway 36, might maintain privacy of corporate identities during authentication of the user system(s) 49 with the enterprise system 22 without compromising traceability, and support secure communications through the communication network 12 using tunnelling techniques, for example, but need not necessarily be able to authenticate external users since the remote user system installation 28 does not host applications that could be used by external user systems.

In operation, a user system 38 that wishes to make use of an application provided by an application server 32 is first authenticated by the identity system 40. Those skilled in the art will be familiar with many security schemes that may be used for this purpose, such as username/password authentication. Where remote access to an application server 32 is supported, user authentication may be handled by the gateway 36, possibly through interactions with an external identity system. The gateway 36 may also be involved in authentication when a user system that is associated with a partner enterprise system or site is locally connected to the enterprise system 22 and wishes to access an application server 32.

When a user has been authenticated, messages or other forms of information may be exchanged between a user system and the application server(s) 32. A user may be allowed to access multiple applications after a single successful authentication. In this case, tracking user activity at the application level can present a significant challenge.

In accordance with embodiments of the invention, new techniques for monitoring, controlling, and reporting on application/service access by individual users are provided.

User-specific application-level session records, described in further detail herein, represent a novel concept in accordance with which application access operations, illustratively web service transactions, initiated by a validated user are grouped together to provide a consolidated view of that user's activity on a corporate network. The term "session" is not intended to refer to a Transmission Control Protocol (TCP) or other networking protocol session, but rather to a contiguous period of time that a user spends accessing applications on a network, such as a corporate network.

Application-level session record functionality may be implemented, for example, at any of a series of subsystems in an SOA architecture, which includes the application platform 34, the gateway 36, and the application manager 42 in the system 10. The application platform 34 and the gateway 36 are network nodes or components that process application access operations; illustratively web service messages, in real time in order to facilitate application integration and to enable rapid and cost effective deployment of SOAs, and therefore may be a logical point for implementation of application session information collection. The application manager 42, which is a network and application management element that can be deployed by an enterprise in order to coordinate any number of application platforms and/or gateways in its network, might provide subsequent access to application sessions for reporting, historical analysis to confirm or demonstrate policy or regulatory conformance, etc.

Benefits of multiple-application session records may include the ability to manage user-specific sessions in real time via policy or administrative action in order to ensure proper corporate governance and the ability to enable demonstration of conformance to regulations via a consolidated audit trail of user activity. Dynamic creation and real time management of application session records can provide a powerful tool that enterprise network administrators do not currently have at their disposal, and represent strong differentiators over conventional systems.

Fig. 2 is a block diagram of an application activity monitoring and control apparatus. The apparatus 50 includes a user system interface 52, a control/management system interface 54, an authentication module 56 operatively coupled to the user system interface and to the control/management system interface, a user database 58 operatively coupled to the authentication module, an application access detector 57 operatively coupled to the authentication module, and a session management module 60 operatively coupled to the application access detector, to a session database 62, to a session policy database 64, and to one or more application server interfaces 66.

As noted above with reference to Fig. 1, the contents of the drawings are intended solely for the purposes of illustration. A device in which the apparatus 50 is implemented may include additional components that have not been explicitly shown, for example. Other embodiments of an apparatus may include further, fewer, or different components than explicitly shown, with similar or different interconnections.

The application access detector 57 for instance, although shown as a separate component in Fig. 2, might instead be integrated with the authentication module 56. Application access by a user could be detected by the authentication module 56 when a user is first authenticated or when checking that a user attempting to access an application has been properly authenticated. Application access detection functions could similarly be implemented in the session management module.

The types of connections through which the components of Fig. 2 are operatively coupled may, to at least some extent, be implementation-dependent. Electronic devices often use various types of physical connectors and wired connections. In the case of cooperating software functions, for example, an operative coupling may be through variables, registers, or commonly accessed areas of a memory, and thus include a logical coupling.

Hardware, software, firmware, or combinations thereof may be used to implement components of the apparatus 50. Processing elements such as microprocessors, microcontrollers, Programmable Logic Devices (PLDs), Field Programmable Gate Arrays (FPGAs), Application Specific Integrated Circuits (ASICs), and other types of "intelligent" integrated circuits may be suitable for this purpose.

The apparatus 50 may interact with other components of a communication network through the interfaces 52, 54, 66. These interfaces may be of the same type or different types, or even be the same interface where the same communication medium is used for information transfers with all other components. However, in many implementations, it is likely that the user system interface 52 will differ from at least the application server interface(s) 66, and that application server interfaces will be different for different application servers. The control/management system interface 54 may be another different interface, although in some cases the apparatus 50 interacts with user systems and an application manager through the same enterprise network interface.

The user system interface 52 enables the apparatus 50 to exchange application access information such as requests and corresponding responses with user systems. Each application server interface 66 similarly allows the apparatus 50 to exchange application access information with a respective set of one or more application servers. This type of architecture for the apparatus 50 might be appropriate, for example, when the apparatus is implemented at an application platform for monitoring all application usage or at a gateway for monitoring usage of applications from partner user systems, since these components process all application access information for an enterprise system. However, it should be appreciated that other implementations are also possible. A monitoring apparatus might instead passively "listen" to application access information, in which case it need not be actively involved in transferring application access information between application servers and user systems.

Through the control/management interface 54, the apparatus 50 may exchange information with a control or management system such as the application manager 42 (Fig. 1). Application session records and/or session policies, for example, may be exchanged with a control or management system through the interface 54.

The structure and operation of the interfaces 52, 54, 66 will be dependent to at least some extent on the communication media and protocols used in application information access transfers. Those skilled in the art will be familiar with many types of interfaces through which application access information may be received and/or transmitted by the apparatus 50.

Each of the databases 58, 62, 64 may be provided in one or more memory devices. Solid state memory devices are common in electronic equipment, and each database may be implemented using one or more memory devices of this type. However, other types of memory devices, including memory devices for use with movable or even removable storage media, may also or instead be used to store the databases 58, 62, 64.

The user database 58 stores user information such as usernames and passwords, which can be used to authenticate a user attempting to access an application server. The session database 62 is used to store records of application access operations performed by a user. Policies such as the particular information to be recorded for an application session and/or user, restrictions on how long a session may be maintained before a user is required to re-authenticate, the number of access operations that may be performed by a user before the user is asked to re-authenticate, etc., are stored in the session policy database 64. Policies may include any or all of user-specific policies, application-specific policies, global enterprise-wide policies, and possibly other types of policies.

Application sessions for which records are stored in the session database 62 provide a historical account of application activity, such as to verify whether application accesses satisfy requirements or regulations, whereas enforcement of session polices stored in the session policy database 64 stops users from performing application accesses that would violate such requirements or regulations.

As noted above, components of the apparatus 50 may be implemented using hardware, software, and/or firmware. These components are therefore described herein primarily in terms of their function. Based on the functional descriptions, a person skilled in the art will be enabled to implement service monitoring techniques according to embodiments of the invention in any of various ways.

In operation, the authentication module 56, the application access detector 57, and the session management module 60 facilitate consolidated application activity monitoring using application sessions, as described in further detail below. Application sessions are dynamically created and maintained by the session management module 60, and are uniquely identifiable containers used for monitoring, controlling, and reporting on application access activity of users as detected by the application access detector 57.

Several functions may be involved in the implementation of application sessions, including session authentication, session monitoring, session policy and control, and session reporting. In the apparatus 50, these functions may be supported by the authentication module 56, the application access detector 57, and the session management module 60. Other embodiments of the invention may provide a different division of these and possibly other functions between further, fewer, or different components.

Session authentication refers to the ability to detect application access by users and create application sessions based on the identities of the users. This may involve, for each received application access message or other form of application access information based upon which the application access detector may detect access to an application by an authenticated user, establishing an identity for the originating or destination user by whom access to the application was initiated. The session maintenance module 60 can then use this identity to determine whether an active application session exists for the user. Although the authentication module 56 might authenticate a user, through interaction with an identity system of an enterprise for instance, before initially granting access to applications, and possibly reauthenticate the user at a later time, the authentication module need not necessarily be involved in identifying the user for each message. The application access detector 57 or the session management module 60 could determine the user for each message from message header information, for example.

The session management module 60 determines whether there is an existing active application session record for the user in the session database 62, as could be determined by searching the database based on user name or some other user identifier. If an active application session record exists, then the session management module 60 applies any associated policies, which are stored in the session policy database 64 and might be searchable depending on the specificity (global, application, user) of session policies, to the received message. Policies could be global or specific to users, user groups, applications, locations, etc. In some embodiments, policies are defined within a policy definition hierarchy, with the most specific applicable policy being applied. A policy generation system, for example, might allow an administrator to define application- and/or user-specific policies that include, or at least do not violate, global enterprise session policies. In this case, the session management module 60 might identify and apply the most specific policy for a user.

Provided a received message is in compliance with the appropriate policies, the session management module 60 updates the existing application session record with a new activity entry to reflect the received message. The session management module 60 could store the actual received message, a hash, digital signature, or other transform of the message, the time at which the message was received, and/or other information associated with the user, the application, and/or the message. The types and formats of the application access information stored in an application session record may also be specified in a policy.

Where it is determined that no active application session record for the user exists in the session database 62, the session management module 60 still determines the appropriate application session policy to be applied, based on the user identity for instance, and applies that policy to the message. A new application session record, indexed by user identifier or possibly a unique session identifier, is created. A creation timestamp could also be generated and stored in the session database 62. An activity entry is added to the new application session record to reflect the received message.

By default, a new application session record may be created for each user that can be uniquely identified. However, an administrator may prefer in some cases to aggregate all activity from all users in an identified user group into a single application session to best suit their needs. In this case, even though a more specific identification can be made, an application session record might be created based on authentication of a group identity or any user within the group.

In the event that a received message does not comply with session policy, the message may simply be dropped. However, it may also be desirable to track session policy violations. A record of non-compliant access attempts could be stored in an application session record or separately. Other actions, such as terminating further access by a user and/or raising an alert or alarm to a system administrator, could also or instead be performed.

Message-based operations as described above are illustrative of operations that may be involved in detecting access to applications in a network and maintaining consolidated records of access by a user to multiple applications. Other embodiments may use similar or different techniques to detect and/or record application access by a user.

Session monitoring refers to the ability to provide relevant details of active and historical application session records to a network or application administrator. In the apparatus 50, this reporting is enabled through the control/maintenance system interface 54. This interface allows an administrator to be authenticated by the authentication module 56 and subsequently access the session database 62. Active application session records are created and maintained in the session database 62, as noted above. When access to a network is terminated, either voluntarily by the user logging off or forcibly in the event of a re-authentication failure or timeout, the formerly active application session record for that user is no longer active, but may remain in the session database 62 as a historical application session record. Session monitoring on an application manager or other control/management system may involve the retrieval, presentation, and possibly remote storage of active application session records and historical application session records from network devices such as application platforms and gateways that it manages.

A manager or other monitoring device may access the session database 62 directly or through the session management module 60. The manager or the session management module 60 may be configured to automatically delete historical records from the session database 62 when the historical records have been accessed, in order to conserve memory space. Deletion of the historical records may instead require an explicit command or other action by the manager or the session management module 60. In some embodiments, at least the active application session records remain in the session database 62.

Active and historical application session records may be stored in different memory devices or areas. In this case, active records are moved to the historical record store upon termination of an application session.

Automatic application session record reporting is also contemplated. Active application session records could be reported to a control/management system by the session management module 60 upon session termination, at certain times of day, or periodically, for example. This may avoid the need for local storage of historical logs at a monitoring apparatus, or at least reduce historical record memory requirements, although complete historical records could still be stored as a backup measure.

One possible benefit of some embodiments of the invention is the ability for administrators to create policies for how various types of users can access applications on their network and how their application utilization is logged. Session policy and control describes the functionality for application session policy creation and enforcement, as well as administrative override capabilities. Session policy enforcement and administrative control could be performed by an application platform and/or a gateway, for example, while an application manager provides functions for the creation of application session policies, illustratively corporate-wide policies, and the downloading of these policies to other components for enforcement.

In the context of session reporting, application session records group together multiple application access transactions initiated by a validated user for different applications, and therefore provide a consolidated audit trail of all user activity. Based on active and/or historical application session records, reports that summarize application usage over a period of time can be generated. These reports can be used, for example, for general reporting and/or for demonstration of regulatory compliance.

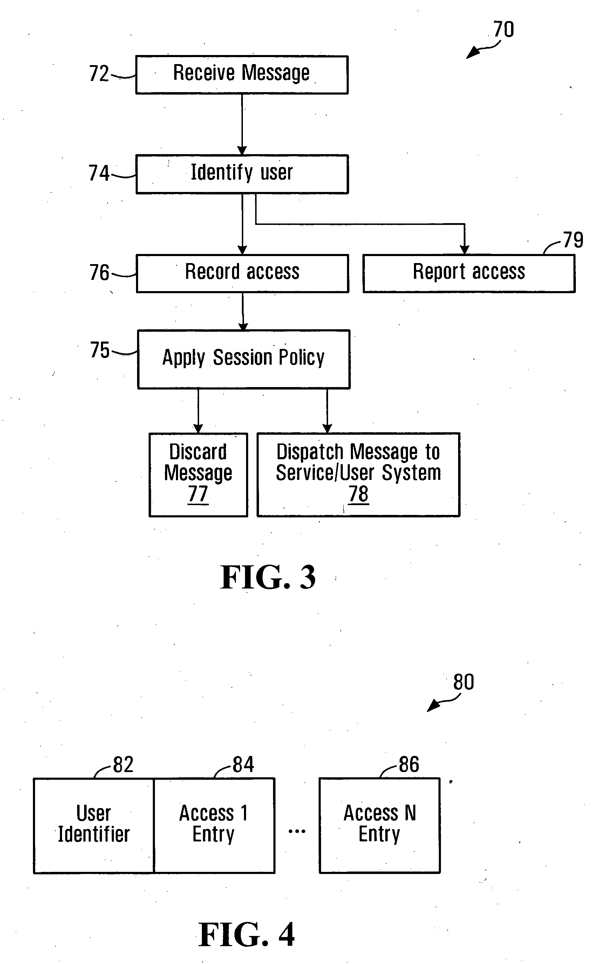

Embodiments of the invention have been described above primarily with reference to the communication system 10 of Fig. 1 and the apparatus 50 of Fig. 2. Fig. 3 is a flow diagram of an application activity monitoring method according to another embodiment of the invention.

The method 70 illustrates operations involved in creating and maintaining application sessions, and subsequently accessing application session logs.

At 72, application access information, illustratively an access request message from a user system or a response message to a user system from an application, is received. This message is proxied at a network node where application session monitoring is implemented. The user from whom a received request message is received or to whom a received response message is destined is identified at 74, and may be authenticated at least initially, and possibly re-authenticated at a later time. This authentication may be performed by comparing user credentials against information in a user database.

The access by the user is recorded at 76. If no active session record exists for the user, an application session is created. Otherwise, a new session record would not be created at 76; the existing active session record is updated with an access entry reflecting the received message.

Once the existing session record has been identified or a new session record has been created at 76, the appropriate application session policy is identified and applied to the message at 75. If the message violates the application session policy, illustratively due to a maximum threshold for messages per session being exceeded, the message is discarded at 77. However, if the message does not violate the application session policy, the message is dispatched to the destination service or user system at 78.

Fig. 3 also represents session monitoring, in the form of the report access operation at 79. Where the request received at 72 originates from an administrator, an application session record would not be created or updated, but is instead reported to the administrator. As noted above, session reporting may also or instead be automated.

The method 70 is illustrative of one embodiment of the invention. Other embodiments may involve performing fewer or additional operations, and/or performing operations in a different order than shown.

For example, administrator functions may entail reporting more than one set of session logs at 79. An administrator might view all active and/or historical application sessions, for instance. Active session termination by an administrator might also be supported using an application session policy and control subsystem, which could be part of the session management module 60 (Fig. 2). Once application session records have been reported at 79, those records could be used to produce an audit report of application sessions using an application session reporting subsystem, which could similarly be part of the session management module 60.

As noted above, embodiments of the invention may use techniques other than message processing to detect and track access by a user to multiple applications.

Further variations of the method 70 may be or become apparent to those skilled in the art.

Fig. 4 is a block diagram of a monitoring data structure, which might be used to store application session records. The data structure 80 includes a user identifier 82, which might identify a user, as shown, or more generally an application session for a user or user group. The access entries 84, 86 include application access information such as an application name or other identifier, a time stamp or other indicator of the time of an application access, a copy of access information such as a web service message or a transformation of access information, etc. Where an application session record tracks application access for a group of users, an access record entry 84, 86 might also include an identification of the specific user by which the access was made.

In accordance with other embodiments of the invention, a data structure might include fewer, further, or different data fields than shown in Fig. 4. Other types of data structures are also contemplated, such as data structures for storing session policies, for example. A user-, group-, or application-specific policy data structure might be substantially similar to the data structure 80, including an identifier of the user/group/application'to which the policy relates, and indications of access restrictions, the information to be stored in an application session, authentication requirements, etc.

There are no available products that allow application and service accesses of a validated user to be monitored, controlled, and reported on in a consolidated manner. Embodiments of the present invention may provide this capability and a useful tool for network and application administrators that need to control, monitor, and report on user access to applications and services on their network.

Application session records allow enterprises to provide corporate governance, to demonstrate compliance with regulations, to provide continuous improvement in their business processes, and to integrate with the business processes of partner organizations. Service providers may also be enabled to generate new revenue from the sale of managed partner extranet equipment and services. A complete shared SOA infrastructure that is application agnostic, and requires minimal modification to existing applications while optimizing network bandwidth and application server processing consumption, also becomes possible.

Monitoring, controlling, and reporting on application access by individual users as disclosed herein may be valuable to network and application administrators in order to provide proper governance of their network and systems as well as to demonstrate compliance with governmental regulations. Tremendous amounts of manual effort involved in conventional techniques for collecting application activity records from multiple applications can be avoided. Application session records, which provide a consolidated audit trail of user activity for reporting requirements, and the dynamic nature of application session creation and maintenance, allow real time control and monitoring of users by network and application administrators. The ability to manage application sessions dynamically, via policy and/or administrative action, is a powerful tool that is not currently available to enterprise system administrators.

In summary, embodiments of the invention can be used to provide the complete functionality of a full service SOA infrastructure as follows:

Corporate Governance: provides monitoring, control and reporting to ensure compliance with regulations and supports continued corporate improvement;

Managed Partner Extranet: secured seamless publishing and consumption of web services with partners and branch locations;

Web Service Performance: ensures availability and performance of web services as per corporate requirements or Service Level Agreements (SLAs);

Corporate Agility & Application Sensitivity: provides application-level routing and message translation based on content of SOAP headers, XML tags, or other message content;

Application Security: provides application-level security by ensuring messages are well formed, detecting XML-based attacks and enforcing application data encryption policy;

Life Cycle Management: provides controlled publishing of web services with rollback;

System Features: provides reliability, scalability, and compliance with open standards.

These and other functions have been disclosed herein, and/or in one or more of the above-referenced related patent applications.

What has been described is merely illustrative of the application of principles of embodiments of the invention. Other arrangements and methods can be implemented by those skilled in the art without departing from the scope of the present invention.

For example, as noted above, the present invention is in no way limited to the particular divisions of functions, method steps, and data structure contents shown in the drawings and explicitly described above.

In addition, although described primarily in the context of methods and systems, other implementations of embodiments of the invention are also contemplated, as data structures and/or instructions stored on one or more machine-readable media, for example.

## Claims

1. A machine-implemented method (70) comprising:
detecting access by a user to a plurality of applications that are provided in a communication network, the detecting comprising receiving (72) messages that include application access information associated with access by the user to one or more applications of the plurality of applications;
determining an application session policy, from a plurality of application session policies, to be applied to the access by the user to the plurality of applications, each application session policy specifying one or more restrictions on a user application session during which the plurality of applications are accessed;
for each received message:
determining whether the received message complies with the determined application session policy;
transferring the application access information between the user and an application server that provides the application with which the application access information is associated where the received message complies with the determined application session policy; and
recording (76), in a multiple-application session record (80) associated with the user, respective entries (84, 86) which record access by the user to each application of the plurality of applications to which access is detected.

2. The method (70) of claim 1, wherein receiving comprises receiving (72), at a web services node (34, 36, 44), a message comprising a user request for access to an application server (32, 46) by which at least one application of the plurality of applications is provided.

3. The method (70) of claim 1, further comprising:
identifying (74) the user by authenticating credentials of the user against information stored in a user database (58).

4. The method of (70) claim 1, wherein the plurality of application session policies comprises at least one of:
a user-specific policy, an application-specific policy, and a global communication network policy.

5. The method (70) of any one of claims 1 to 3, further comprising:
determining, responsive to detecting access by the user to an application of the plurality of applications, whether a multiple-application session record (80) associated with the user exists in a database (62); and
creating a multiple-application session record (80) for storing the respective entries where a multiple-application session record (80) associated with the user does not exist in the database (62).

6. The method (70) of any one of claims 1 to 3, further comprising:
reporting (79) contents of the multiple-application session record (80).

7. The method (70) of any one of claims 1 to 3, wherein the plurality of applications comprises applications provided by a plurality of application servers (32, 46).

8. A machine-readable medium storing instructions which when executed perform the method (70) of any one of claims 1 to 3.

9. An apparatus (50) comprising:
an application access detector (57) operable to detect access by a user to a plurality of applications that are provided in a communication network, the application access detector being operable to detect access by receiving messages that include application access information associated with access by the user to one or more applications of the plurality of applications; and
a session management module (60) operatively coupled to the application access detector (57) and operable to determine an application session policy, from a plurality of application session policies, to be applied to the access by the user to the plurality of applications, each application session policy specifying one or more restrictions on a user application session during which the plurality of applications are accessed, the session management module being further operable to, for each received message:
determine whether the received message complies with the determined application session policy,
transfer the application access information between the user and an application server that provides the application with which the application access information is associated where the received message complies with the determined application session policy, and
record, in a multiple-application session record (80) associated with the user, respective entries (84, 86) which record access by the user to each application of the plurality of applications to which access is detected.

10. The apparatus (50) of claim 9, further comprising:
a memory (62) operatively coupled to the session management module (60) for storing the multiple-application session record (80).

11. The apparatus (50) of claim 9, further comprising:
an authentication module (56), which is operable to detect access by a user to the plurality of applications by authenticating credentials of the user against information stored in a user database (58).

12. The apparatus (50) of any one of claims 9 to 11, further comprising:
an interface (54) for reporting contents of the application session record (80).

13. The apparatus (50) of claim 10, wherein the session management module (60) is operable to create the application session record (80) in the memory (62).

14. A web services node (34, 36, 44) for managing web service application usage, comprising:
the apparatus (50) of any one of claims 9 to 11.

15. The apparatus (50) of any one of claims 9 to 11, wherein the plurality of applications comprises applications provided by a plurality of application servers (32, 46).

16. The method (70) of claim 1, wherein the plurality of application session policies comprise an application session policy that specifies particular information to be recorded in the multiple-application session record during an application session.

17. The method (70) of claim 1, further comprising:
authenticating the user for access to the plurality of applications,
the plurality of application session policies comprising an application session policy specifying restrictions on how long an application session may be maintained before the user is required to re-authenticate.

18. The method (70) of claim 1, further comprising:
authenticating the user for access to the plurality of applications,
the plurality of application session policies comprising an application session policy specifying a number of access operations that may be performed before the user is required to re-authenticate.

## Patentansprüche

1. Maschinenimplementiertes Verfahren (70), umfassend:
Erkennen des Zugriffs, durch einen Nutzer, auf eine Vielzahl von in einem Kommunikationsnetzwerk bereitgestellten Anwendungen, wobei das Erkennen das Empfanden (72) von Nachrichten, welche mit dem Zugriff, durch einen Nutzer, auf eine oder mehrere Anwendungen der Vielzahl von Anwendungen assoziierte Anwendungszugriffsinformationen enthalten, umfasst;
Bestimmten, unter einer Vielzahl von Anwendungssitzungsrichtlinien, einer für den Zugriff durch den Nutzer auf die Vielzahl von Anwendungen anzuwendenden Anwendungssitzungsrichtlinie, wobei jede Anwendungssitzungsrichtlinie eine oder mehrere Einschränkungen in Bezug auf eine Nutzeranwendungssitzung, während welcher auf die Vielzahl von Anwendungen zugegriffen wird, festlegt;
für jede empfangene Nachricht:
Vermitteln, ob die empfangene Nachricht mit der bestimmten Anwendungssitzungsrichtlinie übereinstimmt;
Transferieren der Anwendungszugriffsinformationen zwischen dem Nutzer und einem Anwendungsserver, der die Anwendung, mit welcher die Anwendungszugriffsinformationen assoziiert sind, bereitstellt, wenn die empfangene Nachricht mit der bestimmten Anwendungssitzungsrichtlinie übereinstimmt und
Auszeichnen (76), in einem mit dem Nutzer assoziierten Register für Sitzungen mit mehreren Anwendungen (80), von entsprechenden Eingaben (84, 86), die den Zugriff durch den Nutzer auf jede Abwendung der Vielzahl von Anwendungen, auf welche der Zugriff erkannt wird, auszeichnen.

2. Verfahren (70) nach Anspruch 1, wobei das Empfangen das Empfangen (72), an einem Webdienste-Knoten (34, 36, 44), einer Nachricht mit einer Nutzeranforderung für den Zugriff auf einen Anwendungsserver (32, 46), von welchem mindestens eine Abwendung aus der Vielzahl von Anwendungen bereitgestellt wird, umfasst.

3. Verfahren (70) nach Anspruch 1, weiterhin umfassend:
Identifizieren (74) des Nutzers durch Authentifizieren der Berechtigungen des Nutzers anhand von in einer Nutzerdatenbank (58) gespeicherten Informationen.

4. Verfahren (70) nach Anspruch 1, wobei die Vielzahl von Anwendungssitzungsrichtlinien mindestens entweder eine nutzerspezifische Richtlinie, eine anwendungsspezifische Richtlinie oder eine Richtlinie des globalen Kommunikationsnetzwerks umfasst.

5. Verfahren (70) nach einem beliebigen der Ansprüche 1 bis, 3, weiterhin umfassend:
Ermitteln, in Reaktion auf das Erkennen des Zugriffs durch den Nutzer auf eine Abwendung der Vielzahl von Anwendungen, ob in einer Datenbank (62) ein mit dem Nutzer assoziiertes Register für Sitzungen mit mehreren Anwendungen (80) besteht; und
Einrichten eines Registers für Sitzungen mit mehreren Anwendungen (80) zum Speichern der entsprechenden Eingraben, wenn kein mit dem Nutzer assoziiertes Register für Setzungen mit mehreren Anwendungen (80) in der Datenbank (62) besteht.

6. Verfahren (70) nach einem beliebigen der Ansprüche 1 bis 3, weiterhin umfassend:
Melden (79) der Inhalte des Registers für Sitzungen mit mehreren Anwendungen (80).

7. Verfahren (70) nach einem beliebigen der Ansprüche 1 bis 3, wobei die Vielzahl von Anwendungen von einer Vielzahl von Anwendungsservern (32, 46) bereitgestellte Anwendungen umfasst.

8. Maschinenlesbares Medium, auf dem Befehle gespeichert sind, welche bei deren Ausführung das Verfahren (70) nach einem beliebigen der Ansprüche 1 bis 3 durchführen.

9. Vorrichtung (50), umfassend:
Einen Anwendungszugriffsdetektor (57), betreibbar für das Erkennen des Zugriffs, durch einen Nutzer, auf eine Vielzahl von in einem Kommunikationsnetzwerk bereitgestellten Anwendungen, wobei der Anwendungszugriffsdetektor für das Erkennen des Zugriffs durch den Empfang von Nachrichten, welche mit dem Zugriff, durch einen Nutzer, auf eine oder mehrere Anwendungen der Vielzahl von Anwendungen assoziierte Anwendungszugriffsinformationen enthalten, betreibbar ist;
ein Sitzungsverwaltungsmodul (60), welches operativ an den Anwendungszugriffsdetektor (57) gekoppelt und betriebsbereit ist, um aus einer Vielzahl von Anwendungssitzungsrichtlinien eine für den Zugriff durch den Nutzer auf die Vielzahl von Anwendungen anzuwendende Anwendungssitzungsrichtlinie zu bestimmten, wobei jede Anwendungssitzungsrichtlinie eine oder mehrere Einschränkungen in Bezug auf eine Nutzeranwendungssitzung, während welcher auf die Vielzahl von Anwendungen zugegriffen wirt, festlegt, wobei das Sitzungsverwaltungsmodul weiterhin betriebsbereit ist, um für jede empfangene Nachricht:
zu ermitteln, ob die empfangene Nachricht mit der bestimmten Anwendungssitzungsrichtlinie übereinstimmt;
die Anwendungszugriffsinformationen zwischen dem Nutzer und einem Anwendungsserver, welcher die Abwendung, mit welcher die Anwendungszugriffsinformationen assoziiert sind, bereitstellt, zu transferieren, wenn die empfangene Nachricht mit der bestimmten Anwendungssitzungsrichtlinie übereinstimmt;
und
Aufzeichnen, in einem mit dem Nutzer assoziierten Register für Sitzungen mit mehreren Anwendungen (80), von entsprechenden Eingraben (84, 86), welche den Zugriff durch den Nutzer auf jede Anwendung der Vielzahl von Anwendungen, auf welche der Zugriff erkannt wird, aufzeichnen.

10. Vorrichtung (50) nach Anspruch 9, weiterhin umfassend:
Einen Speicher (62), welcher operativ an das Sitzungsverwaltungsmodul (60) gekoppelt ist, zum Speichern des Registers für Sitzungen mit mehreren Anwendungen (80).

11. Vorrichtung (50) nach Anspruch 9, weiterhin umfassend:
Ein Authentifizierungsmodul (56), welches betreibbar ist, um den Zugriff, durch einen Nutzer, auf die Vielzahl von Anwendungen durch Authentifizieren der Berechtigungen eines Nutzers anhand der in einer Nutzerdatenbank (58) gespeicherten Informationen zu erkennen.

12. Vorrichtung (50) nach einem beliebigen der Ansprüche 9 bis 11, weiterhin umfassend:
Eine Schnittstelle (54) zum Melden der Inhalte des Anwendungssitzungsregisters (80).

13. Vorrichtung (50) nach Anspruch 10, wobei das Sitzungsverwaltungsmodul (60) betreibbar ist, um das Anwendungssitzungsregister (80) im Speicher (62) einzurichten.

14. Webdienste-Knoten (34, 36, 44) zur Verwaltung der Nutzung von Webdienst-Anwendungen, umfassend:
Die Vorrichtung (50) nach einem beliebigen der Ansprüche 9 bis 11.

15. Vorrichtung (50) nach einem beliebigen der Ansprüche 9 bis 11, wobei die Vielzahl von Anwendungen von einer Vielzahl von Anwendungsservern (32, 46) bereitgestellte Anwendungen umfasst.

16. Verfahren (70) nach Anspruch 1, wobei die Vielzahl von Anwendungssitzungsrichtlinien eine Anwendungssitzungsrichtlinie umfasst, welche bestimmt, während einer Anwendungssitzung in dem Register für Sitzungen mit mehreren Anwendungen aufzuzeichnende Informationen festlegt.

17. Verfahren (70) nach Anspruch 1, weiterhin umfassend:
Authentifizieren des Nutzers für den Zugriff auf die Vielzahl von Anwendungen,
wobei die Vielzahl von Anwendungssitzungsrichtlinien eine Anwendungssitzungsrichtlinie umfasst, welche Einschränkungen darüber, wie lange eine Anwendungssitzung aufrechterhalten werden kann, bevor der Nutzer aufgefordert wird, sich erneut zu authentifizieren, festlegt.

18. Verfahren (70) nach Anspruch 1, weiterhin umfassend:
Authentifizieren des Nutzers für den Zugriff auf die Vielzahl von Anwendungen,
wobei die Vielzahl von Anwendungssitzungsrichtlinien eine Anwendungssitzungsrichtlinie umfasst, welche eine Anzahl von Zugriffsvorgängen, die durchgeführt werden können, bevor der Nutzer aufgefordert wird, sich erneut zu authentifizieren, festlegt.

## Revendications

1. Procédé mis en oeuvre par une machine (70) comprenant les étapes suivantes :
détecter l'accès par un utilisateur à une pluralité d'applications qui sont fournies dans un réseau de communication, la détention comprenant la réception (72) de messages qui comprennent des ïnformations d'accès aux applications associées à l'accès messages qui comprennent des informations d'accès aux applications associées à l'accès par l'utilisateur à une ou plusieurs applications parmi la pluralité d'applications ;
déterminer une politique de session d'application, à partir d'une pluralité de politiques de session d'application, à appliquer à l'accès par l'utilisateur à la pluralité d'applications, chaque politique de session d'application indiquant une ou plusieurs restrictions sur une session d'application d'utilisateur durant laquelle on accède à la pluralité d'applications ;
pour chaque message reçu :
déterminer si le message reçu est conforme à la politique de session d'application déterminée ;
transférer les informations d'accès aux applications entre l'utilisateur et un serveur d'application qui fournit l'application avec laquelle les informations d'accès aux applications sont associées lorsque le message reçu est conforme à la politique de session d'application déterminée ; et
enregistrer (76), dans un enregistrement de session d'applications multiples (80) associé à l'utilisateur, des entrées respectives (84, 86) qui enregistrent l'accès par l'utilisateur à chaque application parmi la pluralité d'applications dont l'accès est détecté.

2. Procédé (70) selon la revendication 1, dans lequel la déception comprend la déception (72), au niveau d'un noeud de services Web (34, 36, 44), d'un message comprenant une demande d'un utilisateur pour accéder à un serveur d'application (32, 46) au moyen duquel au moins une application parmi la pluralité d'applications est fournie.

3. Procédé (70) selon la revendication 1, comprenant en outre l'étape suivante :
identifier (74) l'utilisateur en authentifiant des justificatifs d'identité de l'utilisateur par rapport à des information stockées dans une base de données d'utilisateurs (58).

4. Procédé (70) selon la revendication 1, dans lequel la pluralité de politiques de session d'application comprend au moins une politique parmi : une politique spécifique à l'utilisateur, une politique spécifique à l'application et une politique de réseau de communication mondial.

5. Procédé (70) selon l'une quelconque des revendications 1 à 3, comprenant en outre les étapes suivantes :
déterminer, en réponse à la détection de l'accès par l'utilisateur à une application parmi la pluralité d'applications, si un enregistrement de session d'applications multiples (80) associé à l'utilisateur existe dans une base de données (62) ; et
créer un enregistrement de session d'applications multiples (80) pour stocker les entrées respective lorsqu'un enregistrement de session d'applications multiples (80) associé à l'utilisateur n'existe pas dans la base de données (62).

6. Procédé (70) selon l'une quelconque des revendications 1 à 3, comprenant en outre l'étape suivante :
signaler (79) des contenus de l'enregistrement de session d'applications multiples (80).

7. Procédé (70) selon l'une quelconque des revendications 1 à 3, dans lequel la pluralité d'applications comprend des applications fournies par une pluralité de serveurs d'application (32, 46).

8. Support lisible par une machine stockant des instructions qui, lorsqu'elles sont exécutées, exécutent le procécé (70) selon l'une quelconque des revendications 1 à 3.

9. Appareil (50) comprenant :
un détecteur d'accès aux applications (57) permettent de détecter l'accès par un utilisateur à une pluralité d'applications qui sont fournies dans un réseau de communication, le détecteur d'accès aux applications permettent de détecter l'accès en recevant des messages qui comprennent des informations d'accès aux applications associées à l'accès par l'utilisateur à une ou plusieurs applications parmi la pluralité d'applications ; et
un module de gestion de session (60) couplé de manière opérationnelle au détecteur d'accès aux applications (57) et permettant de déterminer une politique de session d'application, parmi une pluralité de politiques de session d'application, à appliquer à l'accès par l'utilisateur à la pluralité d'applications, chaque politique de session d'application indiquant une ou plusieurs restrictions sur une session d'application d'utilisateur durant laquelle on accède à la pluralité d'applications, le module de gestion de session permettant en outre, pour chaque message reçu :
de déterminer si le message reçu est conforme à la politique de session d'application déterminée ;
de transférer les informations d'accès aux applications entre l'utilisateur et un serveur d'application qui fournit l'application avec laquelle les informations d'accès aux applications sont associées lorsque le message reçu est conforme à la politique de session d'application déterminée, et
d'enregistrer, dans un enregistrement de session d'applications multiples (80) associé à l'utilisateur, des entrées respective (84, 86) qui enregistrant l'accès par l'utilisateur à chaque application parmi la pluralité d'applications dont l'accès est détecté.

10. Appareil (50) selon la revendication 9, comprenant en outre :
une mémoire (62) couplée de manière opérationnelle au module de gestion de session (60) pour stocker l'enregistrement de session d'applications multiples (80).

11. Appareil (50) selon la revendication 9, comprenant en outre :
un module d'authentification (56), qui permet de détecter l'accès par un utilisateur à la pluralité d'applications en authentifiant des justificatifs d'identité de l'utilisateur par rapport à des informations stockées dans une base de données d'utilisateurs (58).

12. Appareil (50) selon l'une quelconque des revendications 9 à 11, comprenant en outre:
une interface (54) pour signaler des contenus de l'enregistrement de session d'application (80).

13. Appareil (50) selon la revendication 10, dans lequel le module de gestion de session (60) permet de créer l'enregistrement de session d'application (80) dans la mémoire (62).

14. Noeud de services Web (34, 36, 44) pour gérer une utilisation d'application de services Web, comprenant ;
l'appareil (50) selon l'une quelconque des revendications 9 à 11.

15. Appareil (50) selon l'une quelconque des revendications 9 à 11, dans lequel la pluralité d'applications comprend des applications fournies par une pluralité de serveurs d'application (32, 46).

16. Procédé (70) selon la revendication 1, dans lequel la pluralité de politiques de session d'application comprend une politique de session d'application qui indique des informations particulières à enregistrer dans la session d'applications multiples durant une session d'application.

17. Procédé (70) selon la revendication 1, comprenant en outre l'étape suivante :
authentifier l'utilisateur pour accéder à la pluralité d'applications,
la pluralité de politiques de session d'application comprenant une politique de session d'application indiquant des restrictions sur la durée durant laquelle une session d'application peut être maintenue avant que la ré-authentification de l'utilisateur soit requise.

18. Procédé (70) selon la revendication 1, comprenant en outre l'étape suivante :
authentifier l'utilisateur pour accéder à la pluralité d'applications,
la pluralité de politiques de session d'application comprenant une politique de session d'application indiquant une nombre d'opérations d'accès qui peuvent être réalisées avant que la ré-authentification de l'utilisateur soit requise.
